# EUROPEAN PATENT SPECIFICATION

(11) **EP 0 393 291 B1**
(45) Date of publication and mention of the grant of the patent: **23.08.1995**
(21) Application number: 89500048.7
(22) Date of filing: 20.04.1989
(51) Int. Cl.: G06K 5/02, G06K 15/22

(54) **Writing system and method for producing visible markings on a medium**
Drucksystem und -verfahren zum Erzeugen sichtbarer Markierungen auf einem Träger
Système et méthode d'écriture pour produire des tracés visibles sur un support

(43) Date of publication of application: 24.10.1990
(73) Proprietor: Hewlett-Packard Company, Palo Alto, California 94304 (US)
(72) Inventor: Tarradas, Josep, E-17820 Banyoles - Girona (ES); Rosello, Isidre, E-08026 Barcelona (ES); Halpenny, Tom, Escondido, Ca. 92026 (US); Boeller, Bob, Poway, Ca. 92064 (US)
(74) Representative: Duran Moya, Luis-Alfonso

(56) References cited:
- EP-A- 0 183 535
- WO-A-82/01163
- US-A- 4 587 411

## Description

The invention relates to a writing system according to the preamble of claim 1 and to a corresponding method of producing visible markings on a medium. Examples for such writing systems are plotters which produce graphic representations on a medium, for example on paper.

A writing system of the mentioned kind is known from Hewlett-Packard Journal, November 1981. This known writing system comprises a pen for producing markings on a medium in response to instructions from, for example, a computer. The pen is movable in a first direction and the medium is movable in a second direction perpendicular to the first. Thus, by appropriate control of the drives for the pen and the paper movement, any desired graphical representation can be produced on the medium. The writing system also comprises a rotatable pen carousel carrying a plurality of pens, for example pens of different colours. A pen handling mechanism is provided which permits to move a pen from the pen carousel into a position for plotting on the medium and to replace that pen by another one from the carousel, for example if a different colour is desired.

Writing systems such as the metioned pen plotter are typically used for producing rather complex graphical representations, for example circuit layouts or construction diagrams, which are electronically stored in a computer on which they may also have been created by a user. Once the plotting of those electronically stored drawings has been initiated by a user, the plotting is continuing automatically and the user only has to take the completed drawing from the plotter. In practice, however, it may occur that the completed drawings are not satisfactory as certain lines which should have been plotted are missing or have bad quality because the corresponding pen is clogged, or dried out, or is inking out or is in another way not operating properly. As a consequence thereof, the entire drawing generally has to be plotted again, in particular if a pen failure has already occured at the beginning of the plotting process. Thus, a considerable amount of time is wasted and the efficiency of the plotting is decreased. It is usually tried to cope with these problems by perfecting the components of the plotter so that they are less prone to failures. In pen plotters, for example, measures are taken to avoid drying out or clogging of the pen; one of those measures is to seal the pen tips by rubber caps while they are in the pen carousel so that they stay moist and ready to write. Despite such attempts for perfection of the writing components, it may yet come to writing failures, for example when the ink reservoir of the pen is empty or nearly empty or any foreign substances interfere with the writing system or when any other unforeseeable faults occur. Since the plotting typically is performed with high speed, i.e. high relative velocity between the pen and the medium, already small faults lead to a noticeable degradation of the quality of the drawing.

PCT Patent Application WO 82/01163 discloses a dot matrix printer in which, in order to supervise the quality of the printing, an optical sensor is provided for each dot producing element of the printing head. Each of the optical sensors comprises two glass fibers to carry light from a light emitting diode to the surface of a record medium and to carry the reflected light to a photodiode. Each of the printed dots is detected and the result is compared with a stored print signal to be applied to the driver for the dot producing printing elements. However, the system is to be applied only to dot matrix printers and it does not have any means to carry out the automatic correction of the prints in case that the signals which have been made on the support do not correspond to the desired printing. Instead, only the generation of an error signal is foreseen.

US Patent n^{º} 4,587,411 issued on May 6, 19 86 to Günther Obstfelder and others refers to the method of printing and checking a printing image in a printer of thermal type, specially for the printing of bar codes. The image is scanned just after its printing by means of an opto-electronic sensor which is able to move relative to the paper web, with means to compare the result with the data which have been originally introduced, in such a way that if an error is detected, the rest of the image which has not yet been printed or the image which has just been printed are made unusable, for instance by mean of blackening. Therefore in this previous disclosure, no measures are taken to correct an erroneous printing or a printing not corresponding to the desired printing. Only means are provided for the discarding of the faulty printings. At the same time, the sensor is constituted by a separate device respective to the printing means. The system is provided for its application to bar code printers.

In the EPO Patent Application n^{º} 0 183 535 A2 by Ulinski and others, a printer verifier is provided having means for the self-correction. The printer is aimed at the printing of bar codes having means to explore the just made printing generating electronic signals resulting from the comparison between the real printing with the previously defined printing, having means to correct the successive printings by change of the time in which the printing means are put into operation or by change of the voltage of the electric current which is applied to the device. However, the system, which provides that the sensor will be separated from the printing device, does not provide any means for the automatic change of the writing pens, nor the new printing of the indicia already produced in a plotter starting from the last point which has been detected as satisfactory.

In US Patent 4.435.674 issued on March 6, 1984 to Charles M. Hevenor et al., a plot verifying means is disclosed for correlating the plot produced by the plotting instrument with the program utilized by the controller. However, no reference is made to the intermitent sampling of the present invention to confirm the satisfactory marking quality, including the quality assurance of the plotting by each new pen.

Relative to the above-mentioned prior art, the invention solves the problem to provide a writing system according to the preamble of claim 1 and a corresponding method of producing visible markings on a medium having higher reliability such that the production of good quality drawings is ensured.

According to the invention, this problem is solved for a writing system by the characterizing part of claim 1 and for a method by the features of claim 7.

According to an underlying principle of the invention, the markings actually left on the medium are sensed by a sensing system and it is then detected if the sensed markings have the desired quality, for example if the desired markings have at all been left on the medium and if the lines drawn on the medium have the desired density, clarity, or colour. If a deviation from the desired quality is detected, a correction procedure is initiated for automatically correcting the markings having unsatisfactory quality, or, if such automatic correction should not be possible, to alarm a user, who can then take the necessary steps. The invention thus ensures higher reliability in the production of drawings or characters. The completed drawings or prints have constantly good quality. The drawing or plotting process can take place without the necessity of operator supervision, so that also the productivity of the writing process is increased. Furthermore, the invention ensures in writing systems which plot or print with very high speed that despite of potential failures of components of the writing system, the completed plots or prints do not suffer from quality variations.

The invention has the further advantage that it can be employed with many types of writing systems such as pen plotters or ink jet, laser, or impact printers, or other types of writing systems in which the markings are produced by thermal or electrostatic effect. Furthermore, the invention can be used with a large variety of media, such as paper, vellum, polyester, translucent material.

Advantageous embodiments of the invention are contained in the dependent claims:

According to an embodiment of the invention, the markings left on the medium are sensed optically, for example by directing a light beam on the markings and analysing the reflected light. The use of a separate light source for sensing the markings has various advantages, for example interfering effects caused by light from the environment of the writing system, e.g., from sun light or room lighting, can be avoided by suitable selection of the wavelength range of such a separate light source. The wavelength range used may be in the infrared which has shown to be advantageous for the sensing of black markings.

If the marking means and the sensing means according to the invention are arranged on a common carriage, it is possible to use the drive system of the marking means for positioning the sensing means above a desired spot of the medium to sense the markings left at this spot. Consequently, no additional drive system for the sensing means is required, so that the mechanical design of the writing system is kept simple, thus further contributing to the reliability of the writing system.

The optical system for sensing the markings on the medium may comprise a single optical element for imaging the light onto the medium and for imaging reflected ligth onto the detector. Such a single element, preferably a bifurcated lens, permits non contact sensing with appropriate depth of focus, space-saving design of the optical system and unproblematic adjustement.

The sensing of the markings can be performed intermittently each time after a certain time interval of printing or plotting has elapsed or simultaneously with the plotting or printing, so that the time required for the sensing process is minimized.

Subsequently, an embodiment of the invention is explained in detail with reference to the drawings.

Fig. 1 schematically depicts a writing system according to an embodiment of the invention.

Fig. 2 is a detailed view of the sensing system of the writing system shown in Fig. 1.

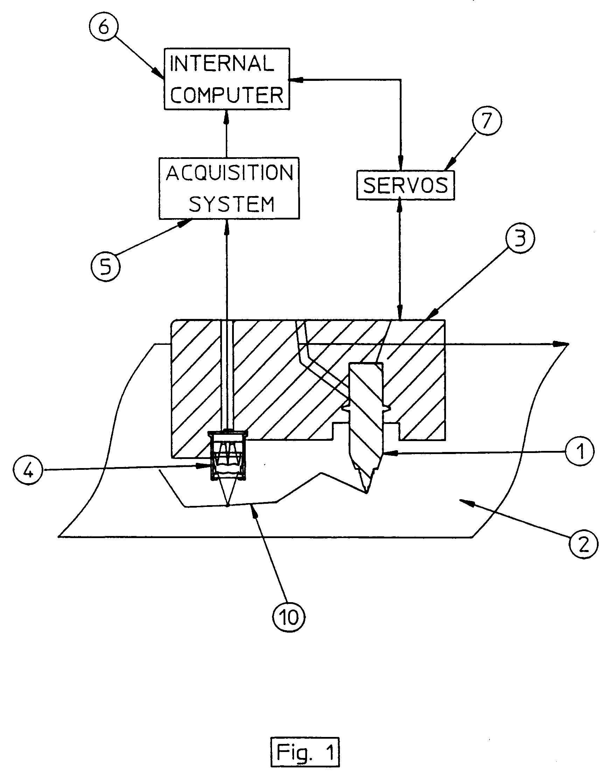

The writing system shown in Fig. 1 is a pen plotter comprising a pen 1 for producing markings such as graphical representations on a medium 2, for example on a sheet of paper. The sheet of paper 2 is shown here in a perspective view with a line 10 which has been drawn by the pen 1. The pen 1 is held by a carriage 3 which can be lowered such that the tip of the pen 1 contacts the medium 2 in order to produce markings thereon. The pen 1 comprises an ink reservoir containing ink of a certain colour. The pen is held by the carriage 3 in such a way that it can easily be replaced by another pen, for example if a different colour for the graphical representations is desired or if the ink reservoir in the pen is empty. The replacement of the pen can be done manually by a user, but it is preferred to perform the replacement automatically under computer control. Several replacement pens and aditional pens of different colours can be arranged in a pen carousel (not shown) from which they can be transported to the carriage 3 and inserted there.

For producing two-dimensional plots on the sheet 2, the carriage 3 is moved in a first direction (X-direction) and the paper is moved in a second direction (Y-direction) orthogonal thereto. The driving of the paper 2 can be acomplished by means of a grit wheel and pinch wheel assembly between which the paper is moved. By appropriate movement of the paper 2 (either in the positive or negative Y-direction) and the carriage 3 any desired graphical representation can be made on the sheet 2. According to another alternative of the invention, the paper 2 may be stationary and the carriage 3 may be movable in the X- and Y-directions so that the pen 1 can be placed on any desired point of the sheet 2.

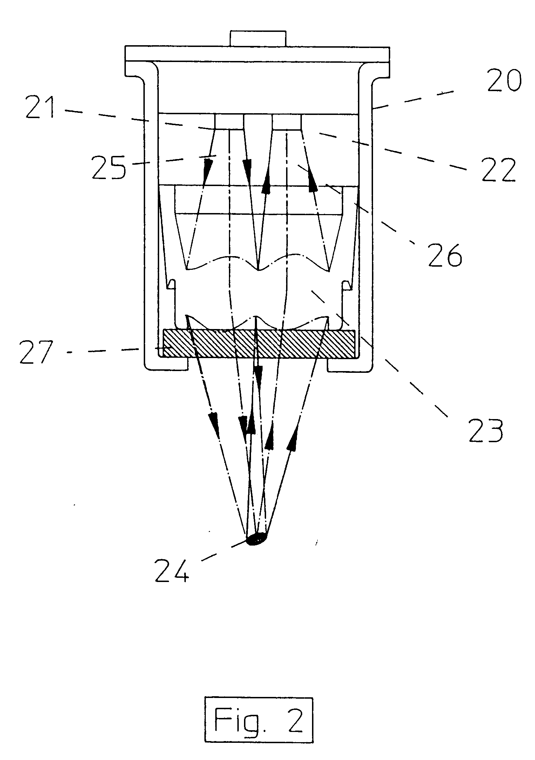

The carriage 3 further comprises a sensing system 4 for sensing the markings 10 produced by the pen 1 on the paper 2. According to the embodiment shown, the sensing system is an optical system which monitors the quality of the graphical representations by means of electromagnetic radiation. In this example, the sensing system emits a beam of radiation which is partially absorbed and partially reflected by the markings 10 on the paper. At least a portion of the reflected radiation is received by the sensing system which produces an output signal in response to the received radiation which is indicative of the quality of the markings 10. Details of the sensing system 4 are explained below with refrence to Figure 2.

The output signals of the sensing system 4 are supplied to an acquisition system 5 wherein they are further processed and converted into digital data. These digital data are then supplied to an internal computer 6 of the plotter wherein a comparison between these input data and data representing the desired quality of the markings is performed. In response to such comparison the internal computer 6 provides output signals to "servos". The signal on the line "servo" is supplied to an arrangement for correcting the writing process if it has been determined via the sensing system that the markings 10 actually made on the paper 2 deviate from a desired quality. The arrangement for correcting the writing process can initiate a plurality of actions, e.g., the pen can be automatically replaced by another pen. or the user can be alarmed that a writing error has occurred so that he can act correspondingly, or those markings which do not meet the desired quality can be plotted again. The block 7 in Figure 1 represents arrangements used in the correction process for moving the carriage 3, for lifting the pen 1 and for replacing the pen by another one. Details of the correction process are explained below.

Fig. 2 shows the sensing system 4 carried by the carriage 3 in more detail. The sensing system 4 comprises a housing 20 wherein an optical system is arranged. The optical system comprises a light source 21 which emits a beam of radiation 25. The light source 21 can be a light emitting diode (LED) having a peak wavelength of 700 nm. The light beam 25 is directed onto a lens 23 by which it is focussed onto a focal spot 24 which is located on the medium 2 on which the plotting is performed. In the example shown, the lens is a bifurcated espheric lens 23. Arranged behind the lens 23 is a filter 27 for limiting the transmitted radiation to a desired wavelength range. In order to make the sensing system insensitive to room light variations, the filter 27 can be selected to transmit light only in the red and infrared wavelength range.

The light impinging on the paper at the focal spot 24 is partially absorbed and partially reflected, depending on the absorptive or reflective properties at this spot. If, for example, no marking is present at the spot at which the sensing system is focussed, there is only a white paper surface from which a higher fraction of radiation is reflected than if a marking were present at this spot. Light reflected from the focal spot 24 enters the sensing system 4 through the filter 27, passes through the bifurcated lens 23 and is then directed as a beam 26 onto a light detector 22. The light detector 22 can be, for example, a silicon photodiode matched with the light source 21. The electrical output signal of detector 22 is supplied to the acquisition system 5 as described above. For illustrating the path of light rays in the optical system, the boundary rays of the emitted and reflected beams in Figure 2 are provided with arrows.

According to a practical example of the invention, the light emitting diode 21 has a diameter of 0,178 mm and a radiant flux of 9 microWatt, and the light detector 22 has an area of 0,4 mm². The bifurcated lens 23 according to that example images the active areas of the emitter 21 and the detector 22 to a single spot 24 of 0,18 mm in diameter; the nominal focal distance is 4,27 mm. The selection of a peak wavelength of the light emitting diode 21 around 700 nm (infrared) is particularly advantageous for the sensing of black markings.

According to a further development of the embodiment of Figure 2, a second light source in addition to the source 21 can be provided. Such an additional light source preferably emits radiation in a different wavelength range than the first light source to facilitate sensing of markings having different colours. If, for example, the additional light source emits radiation in the green wavelength range of the spectrum (around 560 nm), the sensing of red lines is facilitated. Thus, by appropriate selection of the wavelength of the light used for sensing the markings on the medium, it is easily possible to check multi-colour drawings for correct quality and colours. It is understood, however, that it is in principle sufficient to provide a single light source for monitoring the quality of the markings left on the medium.

It is understood that the imaging system shown in Figure 2 using a bifurcated lens is not the only one possible. For example, a fiber optic transmission system could be used to direct light from a light source to the medium and to direct light reflected from the medium to a detector.

In the following, typical plotting procedures according to the invention are explained in more detail. During operation, the plotter receives instructions either from a user or from a computer which graphical representations are to be made on the medium. For example, a computer program may contain information representing a certain drawing which is to be plotted by the writing system. The marking means, e.g. a pen, are controlled in response to such programmed instructions to produce the desired drawing on the medium. In case of plotters wherein the paper is moved in one direction and the pen is moved in a direction perpendicularly thereto, the control of the marking means is achieved by appropriate control of the motors for the paper drive and for the pen drive; in case of plotters wherein the paper is stationary, control of the marking means is achieved by appropriate control of the X-and Y-drives of the marking means.

When a trace 10 has been produced on the medium 2, it is checked with the sensing system 4 if the quality of the trace actually left on the medium corresponds to the desired quality. According to a preferred embodiment of the invention, it is checked if a trace has at all been produced and if a produced trace has the desired properties regarding density (good visibility), or uniformity. It can also be checked if the traces left on the medium have the desired colour. The mentioned properties of the markings can be determined from their light reflective properties. The internal computer of the writing system compares the measured level of reflected light with a nominal level which would result if the actually produced markings had the desired quality. When a deviation has been detected, a correction procedure is initiated.

The checking of the markings left on the medium can be performed in various modes. In one mode, suitable for pen plotters, it is verified after a pen is picked from a pen carousel and before it is returned to the carousel that the quality of the markings achieved with this pen is sufficient, in particular that the pen is delivering ink. Thus, the first vectors drawn after picking up the pen and the last vectors drawn before returning the pen are checked by the sensing system. In another mode, all vectors drawn in a drawing are retraced and checked. This procedure ensures that all potential faults in a drawing are detected, but it is somewhat time-consuming. It is also possible to perform the checking intermittently, i.e. taking samples of the markings left on the medium, so that the total checking time is reduced and plotter throughput is increased.

The checking of the quality of the markings of a desired portion of a drawing is performed according to the embodiment of Figure 2 in the following way: When a checking operation is to take place, the carriage 3 is lifted so that the pen does not longer contact the medium 2. Then the carriage 3 with the sensing system 4 is positioned at the beginning of the portion which is to be checked and then the traces 10 left on the medium are sensed by moving the carriage 3 along or across the traces. The focal distance of the optical system is selected such that the focal spot 24 is located on the medium 2 when the carriage 3 is lifted. As an alternative to the just described checking procedure, the checking could be performed simultaneously with the plotting, thus saving time and increasing plotter throughput.

When writing errors are detected, e.g. due to poor quality or entirely missing markings, a correction process is run to fix the source of the errors. In a pen plotter, the pen causing the errors will be replaced by an equivalent one from the carousel if available. If not, the user is alarmed so that he can procure a replacement for the failing pen. When the pen has been replaced, the correction process continues either by replotting from the last check wherein the quality of the markings was satisfactory or by using a new sheet of paper and repeating the entire plot from the beginning.

## Claims

1. Writing system of the type which comprises marking means (1) for producing visible marks (10) on a medium (2), for example on a paper, having sensing means (4) for sensing markings (10) and detecting means (5, 6) responsive to the sensing means (4), as well as correcting means (7) responsive to the detecting means (5, 6) for initiating a correcting procedure, wherein the markings (10) which deviate from a predetermined quality are corrected, **characterized in that** the deviation from the predetermined quality is determined by checking the visible markings (10) intermittently with the sensing means (4), and by moving the sensing means (4) across the visible markings (10).

2. Writing system according to claim 1, in which the marking means comprises a pen (1) and the correcting means comprise an arrangement for replacing the pen when a deviation of the quality of the markings has been determined.

3. Writing systems according to claim 1 in which the sensing means (4) comprises:
- an optical arrangement for optically sensing the markings left on the medium (2),
- a light source (21) for emitting a beam (25) of radiation,
- first imaging means (23) for directing the beam (25) onto an image spot (24) on the medium (2),
- second imaging means (23) for forming a reflected beam (26) from the radiation reflected from the image spot (24) of the medium (2) to the optical arrangement,
- a light detector (22) for receiving the reflector beam (26).

4. Writing system, according to claim 3, in which the first and second imaging means are combined in a single element (23).

5. Writing system, according to claim 3 or 4, in which the quality of the markings (10) made on the medium (2) is derived from the ratio of the intensity of the light detected to the intensity of light emitted by the optical arrangement.

6. Writing system, according to claims 3 to 5, in which the wave lenght range of the light for sensing the markings (10) is adapted to the colour of the markings.

7. Method for producing visible markings on a medium comprising the steps of:
a) Producing visible markings in response to instructions from a computer or user,
b) Sensing the markings produced on the medium,
c) Determining if the quality of the sensed markings deviate from a predetermined quality, characterized in that,
- the step of sensing the markings produced on the medium (step b) is carried out intermittently.

## Patentansprüche

1. Schreibsystem des Typs, das ein Markierungsmittel (1) enthält, das auf einem Medium (2), beispielsweise auf Papier, sichtbare Markierungen (10) erzeugt, mit einem Abtastmittel (4), das Markierungen (10) abtastet, und einem Erfassungsmittel (5, 6), das auf das Abtastmittel (4) anspricht, sowie mit einem Korrekturmittel (7), das auf das Erfassungsmittel (5, 6) anspricht und eine Korrekturprozedur einleitet, wobei die Markierungen (10), die von einer vorgegebenen Qualität abweichen, korrigiert werden, **dadurch gekennzeichnet, daß** die Abweichung von der vorgegebenen Qualität dadurch geprüft wird, daß die sichtbaren Markierungen (10) mit dem Abtastmittel (4) intermittierend geprüft werden und daß das Abtastmittel (4) über die sichtbaren Markierungen (10) bewegt wird.

2. Schreibsystem nach Anspruch 1, bei dem das Markierungsmittel einen Schreibstift (1) enthält und das Korrekturmittel eine Anordnung umfaßt, die den Schreibstift ersetzt, wenn eine Abweichung der Qualität der Markierungen festgestellt worden ist.

3. Schreibsystem nach Anspruch 1, bei dem das Abtastmittel (4) enthält:
- eine optische Anordnung, die die auf dem Medium (2) zurückgelassenen Markierungen optisch abtastet,
- eine Lichtquelle (21), die einen Lichtstrahl (25) aussendet,
- ein erstes Abbildungsmittel (23), das den Strahl (25) auf einen Bildfleck (24) auf dem Medium (2) richtet,
- ein zweites Abbildungsmittel (23), das aus der vom Bildfleck (24) auf dem Medium (2) zur optischen Anordnung reflektierten Strahlung einen reflektierten Strahl erzeugt,
- ein Lichterfassungsmittel (22), das den Reflektorstrahl (26) empfängt.

4. Schreibsystem nach Anspruch 3, bei dem das erste und das zweite Abbildungsmittel in einem einzigen Element (23) kombiniert sind.

5. Schreibsystem nach Anspruch 3 oder 4, bei dem die Qualität der auf dem Medium (2) hergestellten Markierungen (10) aus dem Verhältnis der Intensität des erfaßten Licht zur Intensität des von der optischen Anordnung ausgesandten Lichts abgeleitet wird.

6. Schreibsystem nach den Ansprüchen 3 bis 5, bei dem der Wellenlängenbereich des Lichts für die Abtastung der Markierungen (10) an die Farbe der Markierungen angepaßt ist.

7. Verfahren zum Herstellen sichtbarer Markierungen auf einem Medium, das die folgenden Schritte enthält:
a) Herstellen sichtbarer Markierungen als Antwort auf Befehle von einem Computer oder einem Anwender,
b) Abtasten der auf dem Medium hergestellten Markierungen,
c) Feststellen, ob die Qualität der abgetasteten Markierungen von einer vorgegebenen Qualität abweicht, dadurch gekennzeichnet, daß
- der Schritt des Abtastens der auf dem Medium hergestellten Markierungen (Schritt b) intermittierend ausgeführt wird.

## Revendications

1. Système d'écriture du type comprenant des moyens de marquage (1) pour produire des marques visibles (10) sur un support (2), par exemple sur un papier, comportant un capteur (4) pour capter les marquages (10) et des détecteurs (5, 6) sensibles aux capteurs (4) ainsi qu'un moyen correcteur (7) sensible aux détecteurs (5, 6) pour lancer une opération de correction, dans lequel les marquages (10) qui s'écartent d'une qualité prédéterminée sont corrigés, caractérisé en ce que l'écart par rapport à la qualité prédéterminée est déterminé en contrôlant les marquages visibles (10) de façon intermittente avec le capteur (4) et en déplaçant le capteur (4) sur les marquages visibles (10).

2. Système de marquage selon la revendication 1, dans lequel le marqueur comprend un stylo (1) et le moyen de correction comprend un agencement permettant de remplacer le stylo lorsqu'un écart de la qualité des marquages a été déterminé.

3. Système d'écriture selon la revendication 1, dans lequel les moyens de marquage comprennent :
- un agencement optique pour capter optiquement les marquages laissés sur le support (2),
- une source lumineuse (21) destinée à émettre un faisceau (25) de rayonnement,
- un premier moyen d'imagerie (23) pour diriger le faisceau (25) sur un point d'image (24) sur le support (2),
- un second moyen d'imagerie (23) pour former un faisceau réfléchi (26) à partir du rayonnement réfléchi depuis le point d'image (24) du support (2) vers l'agencement optique,
- un détecteur de lumière (22) pour recevoir le faisceau de réflecteur (26).

4. Système d'écriture selon la revendication 3, dans lequel les premiers et seconds moyens d'imagerie sont combinés en un seul élément (23).

5. Système d'écriture selon la revendication 3 ou 4, dans lequel la qualité des marquages (10) réalisés sur le support (2) découle du rapport entre l'intensité de la lumière détectée et l'intensité de la lumière émise par l'agencement optique.

6. Système d'écriture selon les revendications 3 à 5, dans lequel la plage de longueur d'ondes de la lumière pour capter les marquages (10) est adaptée à la couleur des marquages.

7. Procédé pour produire des marquages visibles sur un support comprenant des étapes consistant à :
a) produire des marquages visibles en réponse aux instructions provenant d'un ordinateur ou d'un utilisateur,
b) capter les marquages produits sur le support,
c) déterminer si la qualité des marquages captés s'écartent d'une qualité prédéterminée, caractérisée en ce que
- l'étape consistant à capter le marquage produit sur le support (étape b) s'effectue de façon intermittente.
